# EUROPEAN PATENT SPECIFICATION

(11) **EP 2 056 538 B1**
(45) Date of publication and mention of the grant of the patent: **23.02.2011**
(21) Application number: 07721736.2
(22) Date of filing: 14.06.2007
(51) Int. Cl.: H04W 72/04, H04W 8/26

(54) **A METHOD AND DEVICE FOR TRANSMITTING/RECEIVING HIGH-SPEED DOWNLINK PACKET ACCESS ASSOCIATED CHANNEL**
VERFAHREN UND EINRICHTUNG ZUM SENDEN/EMPFANGEN EINES SCHNELLEN MIT PAKETZUGANG ASSOZIIERTEN KANALS DER ABWÄRTSSTRECKE
PROCÉDÉ ET DISPOSITIF DE TRANSMISSION/RÉCEPTION DE CANAL ASSOCIÉ À UN RÉSEAU D'ACCÈS DE PAQUETS DE LIAISON DESCENDANTE HAUT DÉBIT

(30) Priority: 02.11.2006 CN 200610138013
(43) Date of publication of application: 06.05.2009
(73) Proprietor: Huawei Technologies Co., Ltd., Longgang District, Shenzhen Guangdong 518129 (CN)
(72) Inventor: CHEN, Bin, Shenzhen, Guangdong 518129 (CN)
(74) Representative: Lord, Michael
(86) International application number: PCT/CN2007/070115
(87) International publication number: WO 2008/052447

(56) References cited:
- WO-A-2005/064977
- WO-A-2005/079085
- CN-A- 1 741 631
- CN-A- 1 805 557
- CN-A- 1 805 594
- NOKIA: "R2-062201, Further discussion on delay enhancements in Rel7 AND "Work Item Description"" 3GPP TSG-RAN WG2 MEETING #54, 28 August 2006 (2006-08-28), - 1 September 2006 (2006-09-01) XP002567330 Tallin, Estonia
- NOKIA: "R1-062884, Analysis of HSDPA in CELL_FACH state" 3GPP TSG-RAN WG1 MEETING #46BIS, 9 October 2006 (2006-10-09), - 13 October 2006 (2006-10-13) XP002567331 Seoul, South Korea
- 3GPP: "R2-070393, Change request 25.308" 3GPP TSG-RAN WG2 MEETING #56BIS, 15 January 2007 (2007-01-15), - 19 January 2007 (2007-01-19) XP002567332 Sorrento, Italy
- HUAWEI: "R2-070153, Discussion on CELL_FACH Transmission" 3GPP TSG-RAN WG2 MEETING #56BIS, 15 January 2007 (2007-01-15), - 19 January 2007 (2007-01-19) XP002567333 Sorrento, Italy
- LG ELECTRONICS: "R2-062440, Enhancements of CELL_FACH State" 3GPP TSG-RAN WG2 #54, 28 August 2006 (2006-08-28), - 1 September 2006 (2006-09-01) XP002567334 Tallin, Estonia
- 3GPP: "RP-060619, New Work item Proposal: Enhanced CELL_FACH state in FDD" 3GPP TSG RAN MEETING #33, 19 September 2006 (2006-09-19), - 22 September 2006 (2006-09-22) XP002567335 Palm Springs, US
- NOKIA: 'Further discussion on delay enhancements in Rel7' 3GPP TSG-RAN WG2 MEETING #54 vol. R2-062201, 31 August 2006, pages 1 - 5, XP008129581

## Description

### Field of the Invention

The present invention relates to communications technologies, and more particularly, to a method and apparatus for transmitting and receiving information via high speed downlink packet access (HSDPA) channels.

### Background of the Invention

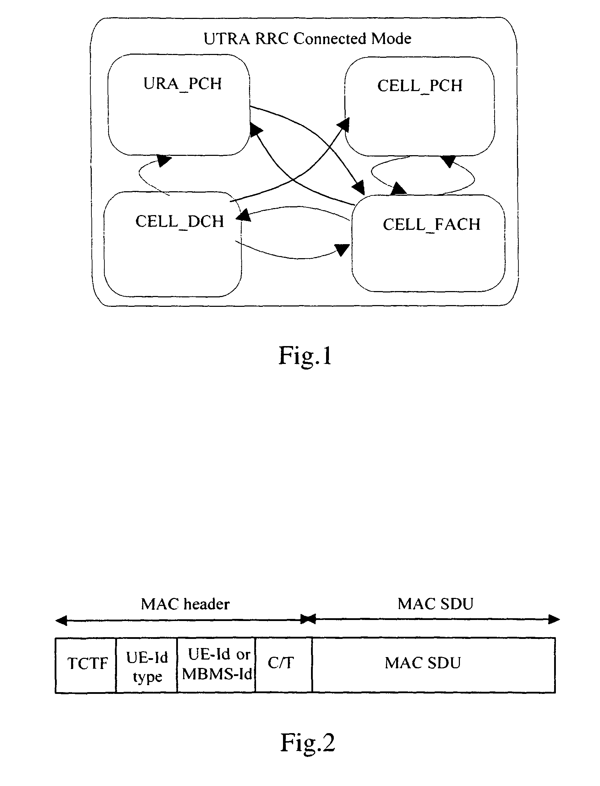

A 3GPP system is divided into three parts, i.e. a user equipment (UE), a universal terrestrial radio access network (UTRAN) and a core network (CN). The interface between a UE and a UTRAN is a Uu interface which provides access for wireless users. Protocol stack of the interface includes radio resource control (RRC) protocol, radio link control (RLC) protocol and medium access control (MAC) protocol, physical layer protocol and so on. The RRC protocol provides signaling connection on the Uu interface to transmit control commands between the UTRAN and the UE. When there is an RRC signaling connection between the UE and the UTRAN, the UE is referred to as in an RRC connection mode, and the UE shall be in one of the following four RRC states: URA_PCH, CELL_PCH, CELL_FACH and CELL_DCH. As shown in figure 1, a UE may experience transition from one of the above four states to another one of the four states.

In a 3GPP system, air interface channels are classified into physical channels, transport channels and logical channels to transmit data (both uplink and downlink) via wireless air interfaces. And the logical channels are classified into common control channels (CCCH) for transmitting common control signaling messages, dedicated control channels (DCCH) for transmitting control signaling messages dedicated to a certain UE, dedicated traffic channels (DTCH) for transmitting traffic data dedicated to a certain UE and etc. The logical channels are used for specifying objects to be transmitted, and the objects include common control information, dedicated control information or dedicated traffic data. The logical channels are mapped to transport channels. The transport channels are used for specifying transport parameters, e.g. the number of blocks involved in a transmission and the value of a transport time interval (TTI) (such as intervals of 10ms, 20ms and so on), the mode of multiplexing logical channels and the mode of multiplexing a plurality of transport channels into physical channels, and so on . The transport channels is classified into dedicated channels (DCH) to which the DTCHs and the DCCHs are mapped, forward access channels (FACH) to which the downlink CCCHs/DTCHs/DCCHs are mapped, random access channels (RACH) to which the uplink CCCHs/DTCHs/DCCHs are mapped, high speed downlink shared channels (HS-DSCH) to which the downlink DCCH and DTCH are mapped, enhanced dedicated channels (E-DCH) to which the uplink DCCH and DTCH are mapped, and etc. The transport channels are mapped to physical channels. The physical channels are classified into dedicated physical channels (DPCH) which are either uplink or downlink channels and to which the DCHs are mapped, high speed physical downlink shared channels (HS-PDSCH) which are downlink channels and to which the HS-DSCHs are mapped, subsidiary common control physical channels (S-CCPCH) which are downlink channels and to which the FACHs are mapped, and physical random access channels (PRACH) which are uplink channels and to which the RACHs are mapped.

Processing performed on the UTRAN side for transmitting data includes steps as follows. An RLC protocol entity divides or combines an RLC Service Data Unit (SDU) to construct an RLC Packet Data Unit (PDU). The RLC protocol entity transmits the RLC PDU to the UE in a logical channel which is mapped to a transport channel in transmitting. The RLC PDU is transmitted to a MAC layer protocol entity which adds an MAC header to the RLC PDU to construct a MAC PDU which is also called a transport block (TB). The MAC layer protocol entity transmits the TB to the UE via the transport channel. During the process, the transport channel is mapped to a physical channel, and thus a physical layer protocol entity processes and transmits the TB to the UE via an air interface. In each transmission, a transport channel transmits data in a TTI. A set of TBs which can be transmitted during a TTI is called a transport block set (TBS). A MAC PDU includes a MAC SDU and a MAC header, wherein the MAC header may have different contents for different physical channels. When a DTCH/DCCH is mapped to a physical channel such as an FACH or an RACH, a MAC PDU may include contents as shown in figure 2. In figure 2, the target channel type field (TCTF) indicates the type of a logical channel such as DCCH, DTCH, CCCH and etc., the UE-Id Type indicates the type of a UE ID and the size of the UE-Id Type is 2 bits, the UE-Id is a UE-Id of 16 bits or 32 bits, the C/T indicates a serial number (0 to 15) of the logical channel which is mapped to the transport channel, and the contents of the MAC SDU is an RLC PDU.

During the processing on the UTRAN side, a type of logical channels may be mapped to different types of transport channels. TBs in each transport channel may be of one or more sizes, and the size of an RLC PDU in a TB can be obtained by subtracting the size of the MAC header from the size of the TB.

Since Release 5, 3GPP provides a high speed downlink packet access (HSDPA) mechanism for transmitting downlink packets via air interfaces at a high speed. It is achieved by interactions between high speed downlink shared transport channels (HS-DSCH), high speed downlink physical shared channels (HS-PDSCH), shared control channels for HS-DSCH (HS-SCCH) and dedicated downlink physical control channels of HS-DSCH (HS-DPCCH). Channel characteristics of the HS-SCCH, the HS-DPCCH and the HS-DSCH for a UE are configured by a Radio Network Controller (RNC) when a Radio Bearer is established. Meanwhile the RNC also allocates an HS-SCCH radio network temporary identifier (H-RNTI) for the UE to identify the UE in a HS-SCCH.

To achieve a high speed downlink transmission, the HSDPA has the following characteristics. (1) Fast scheduling for the shared transport channels is adopted, in which a short TTI up to 2ms is adopted for HS-DSCH transmission (i.e. transmission is scheduled every 2 ms, and the minimal TTI of other transmission channels is up to 10 ms). (2) Adaptive Modulating and Coding (AMC) is adopted, in which a UE measures changes in a downlink radio channel in real-time and reports the channel quality to a base station (Node B) in an HS-DPCCH. And the Node B hereby adjusts the modulating and coding scheme swiftly to adapt to the changes in the radio channel. After determining the modulating and coding scheme, the Node B also performs a fast delicate adjustment to the transmission rate to adapt further to the state of the radio channel and to fully utilize the spectrum of the radio channel. Furthermore, the Node B judges by the channel quality to schedule shared radio resources preferentially for UEs with better channel quality, thereby improving the throughput performance of a cell. Meanwhile, UEs with poor channel quality should also be taken into consideration, or those UEs may be idle for too long. (3) A hybrid acknowledge retransmission (HARQ) mechanism is adopted, in which multiple re-transmission strategies by virtue of redundant information are employed to increase the utilization rate of error correction information , to reduce the bandwidth occupied by re-transmission, and to improve reliability of transmission.

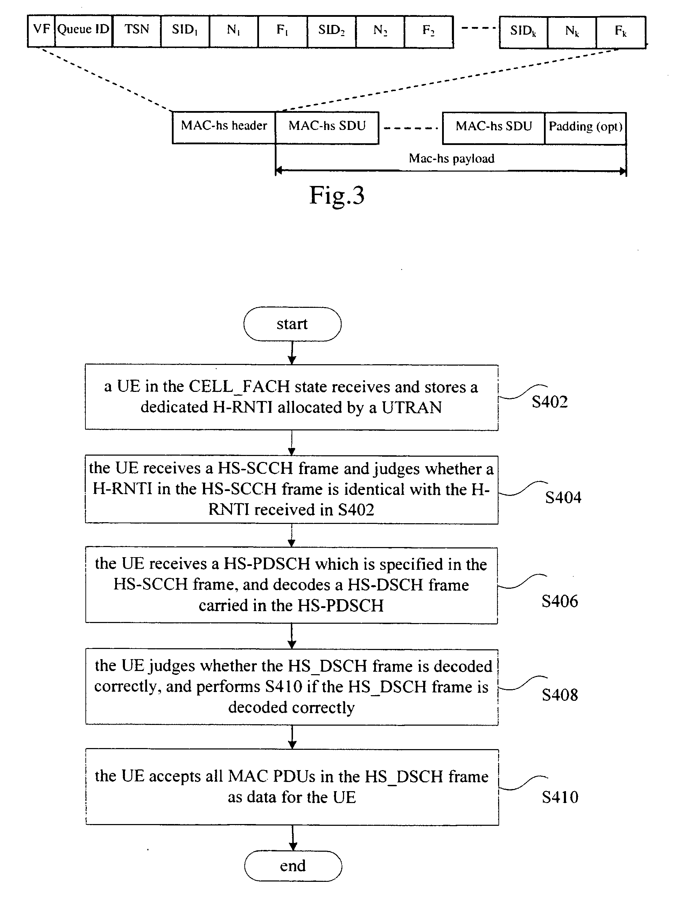

A transmission process can be described as follows. A Node B first transmits scheduling information in an HS-SCCH to designate resource s in subsequent HS-PDSCH for UEs and to specify a transmission mode. The scheduling information in the HS-SCCH includes H-RNTIs (a dedicated H-RNTI will be allocated to each UE which needs to receive information from HSDPA channel s). A UE monitors and decodes the scheduling information transmitted in an HS-SCCH, and receives from an HS-PDSCH channel which immediately follows the HS-SCCH if the H-RNTI in the HS-SCCH indicates that the resources in the channel are scheduled for the UE (the HS-PDSCH is a physical channel which bears the HS-DSCH channel). A frame in an HS-DSCH channel is called a MAC-hs PDU which includes multiple MAC-d PDUs all of which belong to one UE. The structure of a MAC-hs PDU is shown in figure 3. A Queue ID is a queue identifier (each UE may have 8 queues at most). A TSN is a transmission sequence number indicating the sequence number of the current frame, and if two frames have identical TSNs, this means that the subsequent frame is a re-transmission frame of a previous frame. An SID indicates size information of a corresponding series of MAC-d PDU, and the value of N equals the number of the series of MAC-d PDU whose size equals the value of the corresponding SID. And an F is an identifier indicating whether the contents are data. If F=0, the subsequent part is a MAC-hs header, and if F=1, the F is the end of the header and the subsequent part is MAC-hs payload. A MAC-hs SDU is a MAC-d PDU.

In the current protocol, only UEs in a CELL_DCH state can receive information from HSDPA channels. UEs in a CELL_FACH state can not receive information from the HSDPA channels despite the UEs have DCCHs and DTCHs, because the UEs have no dedicated HSDPA control channels and dedicated HSDPA uplink subsidiary control channels and the DCCHs and DTCHs can only be mapped to downlink FACHs and uplink RACHs.

In an application entitled DIRECT TRANSITION TO CLL DCH, with a publication number of WO2005/079085, disclosed are methods and arrangements for reducing the time delay associated with the initialization of a data transfer in a UTRAN. The RNC connectable to a UMTS network and to a plurality of UEs, wherein the UEs are capable of being in the states, URA_PCH, CLL_PCH, CELL_FACH or CELL_DCH, comprises means for handling a data transfer initiating message, means for introducing a delay reducing information in the data transfer initiating and means for transferring the UE from the URA_PCH or the CELL_PCH state directly to the CELL DCH state by means of the delay reducing information in the data transfer initiating message.

Nokia Company proposed in resolution R2-062201 a scheme for a UE in the CELL_FACH state to receive information from the HS-DSCH channel. Details of the scheme are as follows. (1) A UTRAN broadcasts a common H-RNTI in system broadcast information, and all UEs in the CELL_FACH state receive information from an HS-SCCH and use the common H-RNTI to determine whether to receive information carried in the scheduled shared channels. (2) There may be multiple UEs being in the CELL_FACH state within a cell, and all the UEs in the CELL_FACH state will receive the corresponding HS-DSCH frame when they detect that the H-RNTI in the HS-SCCH is identical with the common H-RNTI. (3) An HS-DSCH frame includes multiple MAC-c PDUs, and the header of each MAC-c PDU includes a UE ID for identifying the UE to which the MAC-d PDU belongs. Each of those UEs decodes the MAC-c PDUs, judges one by one whether the UE ID in each MAC-c PDU is identical with a local UE ID, and accepts the MAC-d PDU if the UE ID is identical with the local UE ID, otherwise discards the MAC-d PDU. (4) Because the UE has no HSDPA subsidiary feedback channels, it will receive no ACK response and Channel Quality Indicator (CQI). To make up for the lack of ACK and not knowing whether the UE receives correctly, a Node B may re-transmit the HS-DSCH frames for several times. Due to the lack of a channel quality indicator, the Node B is incapable of selecting a modulating and coding scheme, so the Node B will adopt a default modulating and coding scheme.

However, the above technical scheme has disadvantages as follows. (1) When a common H-RNTI is included in an HS-SCCH, each of all the UEs in the CELL_FACH state has to receive information carried in the HS-DSCH channel and decode the frame therein, and judge whether there is a MAC PDU for it in the frame. As a result, for some UEs, battery energy is wasted in decoding the HS-DSCH frames which do not include any MAC PDU for these UEs. (2) Since the common H-RNTI indicates all the UEs in the CELL_FACH state, it still needs a UE ID for each MAC PDU in the HS-DSCH frame to identify the right UE for which the PDU destines. Each HS-DSCH frame includes multiple MAC PDUs, and the multiple MAC PDUs each has a UE ID, which is typically 16 bytes, to identify the UE for which the PDU destines. As a result, channel bandwidth is wasted. (3) Because no UE is capable of reporting channel quality, UTRAN can only transmit information via the HSDPA channels at a lower rate to the UE being in the CELL_FACH state, which reduces the radio spectrum utilization ratio of the air interfaces.

In general, the technical scheme in accordance with the prior art for receiving information from HS-DSCH channels by UEs in the CELL_FACH state has drawbacks such as large battery consumption, wasting of HSDPA bandwidth and lower utilization ratio of system spectrum. And with the development of the mobile communication technology and demands for diversifi ed service s, a more preferable technical scheme is needed to enable a UE in the CELL_FACH state to receive information from HSDPA channels.

### Summary

In view of the above, embodiments of the present invention provide a method for transmitting and receiving information via HSDPA channels. The method for receiving includes:
receiving (S404), by the UE in a CELL_FACH state, a high speed shared control channel, HS-SCCH, frame, a high speed downlink shared channel, HS-DSCH, a radio network temporary identity, H-RNTI being carried in the HS-SCCH frame;
if the H-RNTI carried in the HS-SCCH frame is identical with a dedicated H-RNTI allocated by the UTRAN for the UE, receiving (S406), by the UE, a high speed physical downlink shared channel, HS-PDSCH specified by the HS-SCCH frame and decoding (S406) a HS-DSCH frame carried in the HS-PDSCH.

The method for transmitting includes:
transmitting, by the UTRAN, a high speed shared control channel, HS-SCCH, frame, wherein the HS-SCCH frame carries a high speed downlink shared channel, HS-DSCH, radio network temporary identity, H-RNTI; and
transmitting, by the UTRAN, in a high speed physical downlink share channel, HS-PDSCH, specified by the HS-SCCH frame, a HS-DSCH frame to be received and decoded by a UE in a CELL_FACH state with a dedicated H-RNTI which is identical with the H-RNTI carried in the HS-SCCH frame, wherein the dedicated H-RNTI is allocated by the UTRAN for the UE.

Embodiments of the present invention also provide an apparatus for receiving information from HSDPA channels. The apparatus includes:
an identity receiving unit (802), adapted to receive a dedicated high speed downlink shared channel, HS-DSCH, radio network temporary identity, H-RNTI, allocated by the UTRAN for the UE;
a control channel frame receiving unit(804), adapted to receive a high speed shared control channel, HS-SCCH, frame;
a comparing unit (806), adapted to judge whether a H-RNTI in the HS-SCCH frame received by the control channel frame receiving unit (804) is identical with the dedicated H-RNTI received by the identity receiving unit (802), and transmit a receiving indication to a physical channel receiving unit (808) if the H-RNTI carried in the HS-SCCH frame is identical with the dedicated H-RNTI;
the physical channel receiving unit (808), adapted to receive a high speed physical downlink shared channel, HS-PDSCH, specified by the HS-SCCH frame in response to receipt of the receiving indication from the comparing unit (806); and
a decoding unit (810), adapted to decode a HS-DSCH frame carried in the HS-PDSCH.

Embodiments of the present invention also provide an apparatus for transmitting information via an HSDPA channel. The apparatus includes:
an identity allocating unit (816), adapted to allocate a dedicated high speed downlink shared channel, HS-DSCH, and a dedicated radio network temporary identity, H-RNTI, for the UE in CELL_FACH state, and transmit the dedicated H-RNTI to the UE through radio resource control signaling; and
a medium access control packet data unit, MAC PDU, transmitting unit (818) communicating with the identity allocating unit (816), adapted to transmit MAC PDU destined for the UE in a high speed shared packet access channel to the UE.

According to the above technical scheme, the embodiments of the present invention have merits in that battery power of user equipments is saved, bandwidth of HSDPA is fully utilized and the spectrum utilization ratio of the high speed downlink packet access is improved.

### Brief Description of the Drawings

Figure 1 is a schematic diagram showing radio resource control states of a user equipment according to the prior art;
Figure 2 is a schematic diagram showing a structure of a Medium Access Control Packet Data Unit (MAC PDU) according to the prior art;
Figure 3 is a schematic diagram showing a frame structure in a HS-DSCH according to the prior art;
Figure 4 is a flowchart showing a method for receiving HSDPA channels in the CELL_FACH state according to embodiment 1 of the present invention;
Figure 5 is a flowchart showing a method for transmitting HSDPA channels to a user equipment in the CELL_FACH state according to embodiment 2 of the present invention;
Figure 6 is a flowchart showing a method for transmitting a MAC PDU in example 1;
Figure 7 is a flowchart showing a method for transmitting a MAC PDU in

### example 2; and

Figure 8-A and Figure 8-B are block diagrams showing two apparatuses respectively for receiving and transmitting HSDPA channels in the CELL_FACH state according to embodiment 4 of the invention.

### Embodiments of the Invention

Exemplary embodiments of the present invention are described hereafter in detail by reference to the accompanying drawings which are part of the present application and are used for explaining principles of the present invention along with the embodiments thereof.

### Embodiment 1

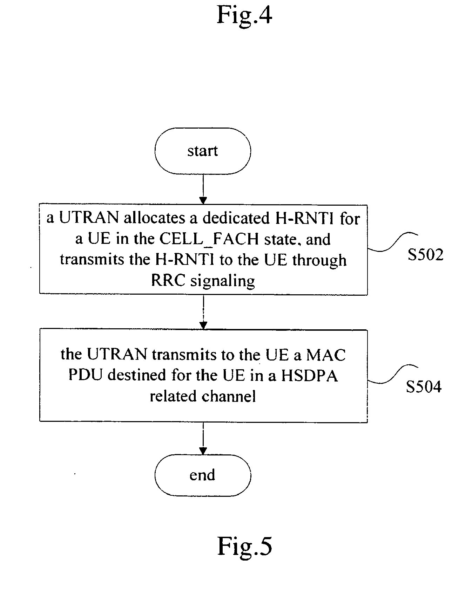

In the present embodiment, a method for receiving HSDPA channels in a CELL-FACH state is provided. As shown in figure 4, the method includes steps as follows.

In block S402, a User Equipment (UE) in the CELL_FACH state receives and stores a dedicated high speed downlink shared channel (HS-DSCH)-radio network temporary identity (H-RNTI) allocated by a Universal Terrestrial Radio Access Network (UTRAN).

In block S404, the UE receives a Shared control channel (HS-SCCH) frame of and judges whether an H-RNTI in the HS-SCCH frame is identical with the H-RNTI received in S402, and performs S406 if the H-RNTI in the HS-SCCH frame is identical with the H-RNTI received in S402, otherwise performs S404.

In block S406, the UE receives a High Speed Physical Downlink Shared Channel (HS-PDSCH) which is specified in the HS-SCCH frame, and decodes a High Speed Downlink Shared Channel (HS-DSCH) frame carried in the HS-PDSCH.

In block S408, the UE judges whether the HS_DSCH frame is decoded correctly, and performs S410 if the HS_DSCH frame is decoded correctly, or otherwise the UE does not accept the data and quits the flow of the present invention.

In block S410, the UE accepts all medium access control packet data units (MAC PDU) in the HS_DSCH frame as data for the UE.

In the above process, if the two H-RNTIs are not identical in S404, the UE performs S404. Therefore, after judging that there is no H-RNTI in the HS-SCCH destined the UE, the UE in the CELL_FACH state will not receive the HS-PDSCH channel corresponding to the HS-SCCH. Because all MAC PDUs in an HS-DSCH frame belong to one UE, and the H-RNTIs of other UEs in the CELL_FACH state differs from the H-RNTI of the UE, other UEs may not receive the HS-PDSCH channel corresponding to the HS-SCCH, and in such case battery power can be saved.

Moreover, the High Speed Downlink Shared Channel (HS-DSCH) frame in S406carries MAC PDUs which include no UE ID, so bandwidth in the HS-DSCH frame can be used to carry service data or other information, which results in that bandwidth of the HSDPA can be utilized fully.

After S410, the process returns to S402 to perform the process for another time. Moreover, the UE may stop receiving the HS-SCCH frame at the time when the UTRAN instructs the UE to stop (through RRC signaling notification) or when the UE release the radio bearer or when the UE quits the CELL_FACH state or when the UE quits the link state, etc.

### Embodiment 2

The present embodiment provides a method for transmitting a high speed downlink packet access channel to a UE in the CELL_FACH state.

As shown in figure 5, the method includes the following steps.

In block S502, a Universal Terrestrial Radio Access Network (UTRAN) allocates a dedicated H-RNTI for a UE in the CELL_FACH state, and transmits the H-RNTI to the UE through Radio Resource Control (RRC) signaling.

In block S504, the UTRAN transmits to the UE a medium access control data unit (MAC PDU) destined the UE in a high speed shared packed access (HSDPA) channel.

In the above S502, the UTRAN may determine whether to allocate an H-RNTI for the UE according to service status of the UE (e.g. information of traffic, data occurrence frequency and etc.), or may allocate an H-RNTI for each of the UEs in the CELL-FACH state. It should be noted that a same H-RNTI may be allocated for different UEs or different H-RNTIs may be allocated for different UEs.

The process of the UTRAN transmitting to the UE the MAC PDU destined the UE through HSDPA channels may be implemented through multiple ways. Detailed process will be described hereafter in combination with specific examples.

### Example 1

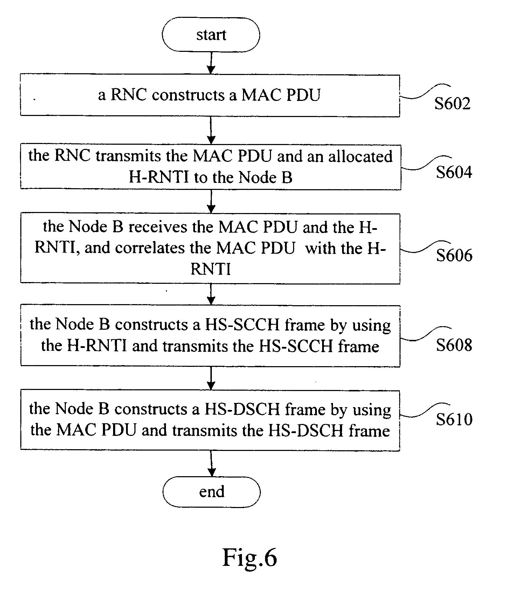

As shown in figure 6, the S502 may include the detailed steps as follows.

In block S602, a Radio Network Controller (RNC) constructs a Medium Access Control Data Unit (MAC PDU) which carries a medium access control packet header which does not include a User Equipment Identifier (UE ID).

In block S604, the RNC transmits the MAC PDU and an allocated H-RNTI to the Node B.

In block S606, the Node B receives the MAC PDU and the H-RNTI, and correlates the MAC PDU with the H-RNTI.

In block S608, the Node B constructs a Shared control channel (HS-SCCH) frame with the H-RNTI and transmits the HS-SCCH frame.

In block S610, the Node B constructs a High Speed Downlink Shared Channel (HS-DSCH) frame with the MAC PDU and transmits the HS-DSCH frame.

In the above S604, the RNC transmits to the Node B the H-RNTI corresponding to the MAC PDU, or the H-RNTI corresponding to the MAC PDU and the time information of transmitting the MAC PDU. And in S608, the Node B transmits the MAC PDU through an HS-DSCH within a time range indicated by the time information.

In S606, the Node B receives the MAC PDU and may store the MAC PDU in a separate queue (or in other types of storage devices, or in a storage device storing other data). And the Node B may transmit the MAC PDUs to the UE in the same order of receiving the MAC PDUs (alternatively, the data may also not be transmitted to UE in the order). During the transmission, the HS-SCCH frame may be transmitted by using the H-RNTI transmitted by the RNC corresponding to the HS-SCCH frame.

### Example 2

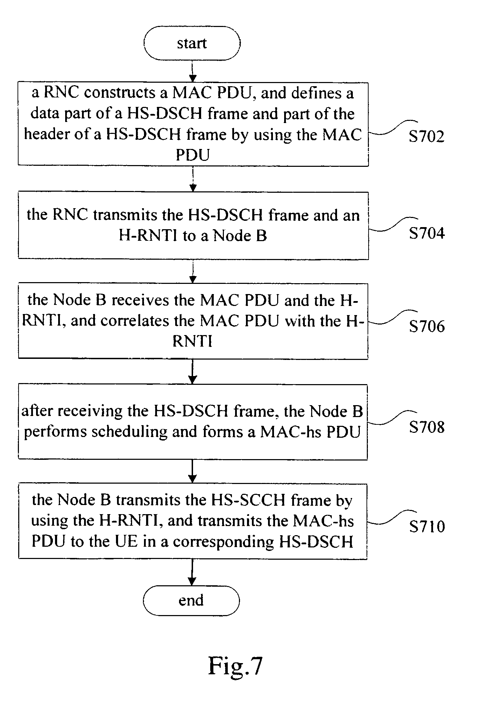

As shown in figure 7, the S502 may include the following steps:
In block S702, an RNC constructs a MAC PDU, and constructs payload (MAC-hs SDU) and part of a header of an HS-DSCH frame by using the MAC PDU which carries a medium access control packet header which does not include a User Equipment Identifier (UE ID).
In block 704, the RNC transmits the HS-DSCH frame and the H-RNTI to a Node B.
In block S706, the Node B receives the MAC PDU and the H-RNTI, and correlates the MAC PDU with the H-RNTI.
In block S708, after receiving the HS-DSCH frame, the Node B performs scheduling and defines a TSN, a Version Flag (VF) and a Queue ID in the HS-DSCH frame to form a MAC-hs PDU.
In block S710, the Node B constructs an HS-SCCH frame by using the H-RNTI and transmits the HS-SCCH frame, and transmits the MAC-hs PDU to the UE through a corresponding HS-DSCH.
In S702, the RNC constructs the HS-DSCH by copying the HS-DSCH into a large memory or by incorporating several parts of a memory (as shown in figure 3).
In S704, the RNC transmits to the Node B the H-RNTI corresponding to the HS-DSCH frame, or the H-RNTI corresponding to the HS-DSCH frame and the time information of transmitting HS-DSCH frame. In S710, the Node B transmits the HS-DSCH frame in an HS-DSCH in a time range indicated by the time information. It should be noted that, in this step, the RNC transmits the time information to the UE along with the HS-DSCH frame in order to instruct the Node B to transmit the HS-DSCH frame transmitted by the RNC to the UE within a specified time. The time information may be a Connection Flow Number (CFN) which is for synchronizing the transmitting channel between the UE and the UTRAN, and thus the Node B schedules and transmits the HS-DSCH frame transmitted by the RNC of in the CFN to a specified UE. The time information may also be a CFN range, in which case the Node B schedules and transmits the HS-DSCH frame in a time range specified by the CFN range to the specified UE. The time information may also be an HS-DSCH frame number. Because time length of an HS-DSCH frame is 2ms, and time length of a CFN is 10ms, the HS-DSCH frame number equals to CFN multiplied by 5 and plus x (herein x is an integer from 0 to 4).

As described above, in the present embodiment, an HS-DSCH frame transmitted to a UE in the CELL_FACH state by the UTRAN carries MAC PDUs which does not include a UE ID, wherein the MAC PDUs belong to a specific UE. The UTRAN encodes the HS-SCCH using the H-RNTI of the UE, and accordingly, all MAC PDUs in an HS-DSCH frame corresponding to an HS-SCCH frame received by the UE belong to the UEs.

Furthermore, when the UTRAN constructs an HS-DSCH frame, it can be configured that for a UE in the CELL_FACH state receiving the HS-DSCH, a MAC-hs SDU is a MAC PDU (may be a MAC-d PDU or a MAC-c PDU). Moreover, it can be configured that length of a MAC PDU corresponding to a MAC-hs SDU is the same with the length of the SDU in the MAC PDU in a FACH. In this way, the RLC may construct a PDU according to a same PDU length as other PDUs regardless of whether the RLC PDU is to be transmitted through a FACH or an HS-DSCH.

### Embodiment 3

The present embodiment provides a method for transmitting a channel quality indicator (CQI) of a high speed downlink packet access channel in the CELL-FACH state.

In the method, a UE transmits channel quality indicating information to an RNC together with radio link control status information. And the RNC transmits the channel quality indicating information to a Node B.

Because a UE has no dedicated uplink physical channel to transmit the CQI to a Node B according to the prior art, the method of the present embodiment enable the UE to transmit the CQI to the RNC in an RACH. Because a UE in the CELL_FACH state has DCCH and DTCH channels, and the channels may be in a RLC Acknowledging Mode (RLC AM), the UE needs to return RLC acknowledge information to the RNC after receiving the data in the DCCH or DTCH. And it is necessary for the UE to transmit RLC Status information (RLC Status) to the RNC in an RLC acknowledging mode. Although an RLC acknowledging (or RLC status) PDU is usually small, it occupies an RACH PDU (or may be transmitted together with uplink data), and quantity of information in the CQI is very small. Therefore, according to the embodiment of the present invention, a UE may transmit the CQI information together with RLC acknowledging information or RLC status information, by which the CQI information will not be transmitted in a separate RACH PDU. And the UE may also transmit the CQI information in a separate RACH PDU when there is no RLC acknowledging information or RLC status information to be transmitted.

The RNC determines a modulating and encoding scheme for an HSDPA physical channel and length of an HS-DSCH frame according to the channel quality indicator transmitted by the UE. Alternatively, the RNC may transmit the CQI information to a Node B instead of determining the modulating and encoding scheme for the HSDPA physical channel, and the Node B may determine the modulating and encoding scheme according to the CQI information. In the present embodiment, the RNC transmits the CQI information to the Node B and the Node B determines the modulating and encoding mode. (The modulating and encoding mode for the HS-PDSCH will affect the length of the HS-DSCH frame, which may impact the UTRAN in constructing and transmitting the HS-DSCH).

To enable an RNC to transmit an HS-DSCH frame constructed by the RNC to a Node B, a new FP frame is defined in accordance with embodiments of the present invention, which is referred to as an HS-DSCH frame FP frame (to differentiate with an HS-DSCH FP frame as prescribed in existing standards. The HS-DSCH FP in the existing standards carries multiple MAC-d PDUs of a UE instead of an HS-DSCH frame). The HS-DSCH frame FP frame of the present invention carries MAC-hs payload and part information of a header (SID, N, F) of an HS-DSCH frame, wherein the other information in a header such as Queue ID, VF and TSN are set by the Node B.

It can be seen from the above that, a UE reports channel quality in an RACH channel (in the present invention, the CQI is preferably transmitted together with an RLC responsive packet or an RLC status packet in the RACH, so that the RACH bandwidth can be saved), and thus the UTRAN (the RNC or the Node B) may determine the modulating and encoding scheme and the frame length of the HS-DSCH frame by using the channel quality indicator. If the channel quality is good, the frame length of the HS-DSCH can be longer. Accordingly, it can be avoided to always utilize HS-DSCH frames of small frame length, which improves frequency utilization rate of the HSDPA.

### Embodiment 4

The present embodiment provides apparatuses respectively for receiving and transmitting information in a high speed downlink packet access channel in the CELL-FACH state.

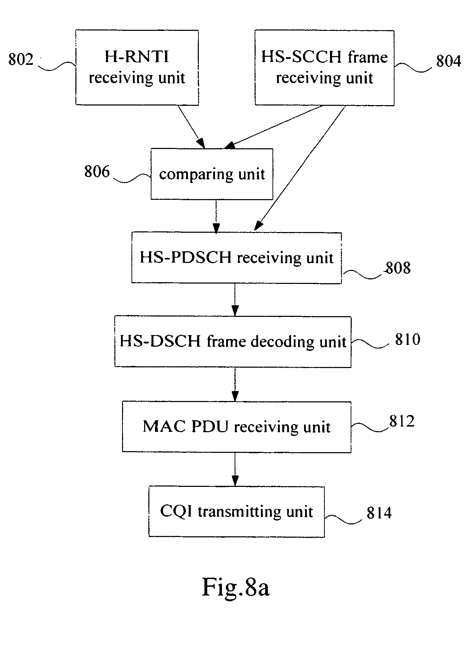

The apparatus for receiving is located on the user equipment side, and as shown in figure 8-A, the apparatus includes:
a high speed downlink shared channel radio network temporary identity (H-RNTI) receiving unit 802, adapted to receive and store a dedicated H-RNTI allocated by a UTRAN;
a High Speed downlink Shared Control Chanel (HS-SCCH) frame receiving unit 804, adapted to receive an HS-SCCH frame;
a comparing unit 806, adapted to judge whether an H-RNTI in the HS-SCCH frame received by the HS-SCCH frame receiving unit 804 is identical with the H-RNTI allocated by the UTRAN, and transmit a receiving indicating information to a high speed physical downlink shared channel receiving unit;
a high speed physical downlink shared channel (HS-PDSCH) receiving unit 808, adapted to receive information from an HS-PDSCH indicated in the HS-SCCH frame in response to the receiving indicating information transmitted by the comparing unit 806;
a high speed downlink shared channel (HS-DSCH) frame decoding unit 810, adapted to decode an HS-DSCH frame carried in the HS-PDSCH received by the HS-PDSCH receiving unit 808; and
a medium access control packet data unit (MAC PDU) receiving unit 812, adapted to accept all MAC PDUs in the HS-DSCH decoded by the HS-DSCH frame decoding unit 810 as data of the UE.

As shown in 8-A, the apparatus preferably further includes: a channel quality indication (CQI) transmitting unit 814 communication with the MAC PDU receiving unit 812, adapted to transmit the channel quality indicating information together with radio link control status information to a Radio Network Controller (RNC).

The apparatus for transmitting is arranged at a Universal Terrestrial Radio Access Network (UTRAN) side, and as shown in 8-B, the apparatus includes:
a H-RNTI allocating unit 816, adapted to allocate a dedicated H-RNTI for a UE in the CELL_FACH state, and transmit the H-RNTI to the UE through Radio Resource Control (RRC) signaling; and
a Medium Access Control Data Unit (MAC PDU) transmitting unit 818 communication with the H-RNTI allocating unit of 816, adapted to transmit to the UE the MAC PDU destined for the UE through a high speed shared packet access channel.

The MAC PDU transmitting unit 818 includes: a MAC PDU constructing module 818-2 arranged at the radio network controller side, adapted to construct a MAC PDU Which carries a medium access control packet header not including a user equipment identifier; a High Speed Downlink Shared Channel (HS-DSCH) frame constructing module 818-4 arranged at the Node B side, adapted to construct an HS-DSCH frame using the MAC PDU constructed by the MAC PDU constructing module 818-2 and transmit the HS-DSCH frame; a Shared control channel (HS-SCCH) frame constructing module 818-6 arranged at the Node B side, adapted to construct a shared control channel frame using an H-RNTI allocated by the H-RNTI allocating unit 816, and transmit the shared control channel frame; and a CQI receiving module 818-8 arranged at the radio network controller side, adapted to receive CQI information from a terminal and transmit the received CQI information to the HS-DSCH frame constructing module 818-4.

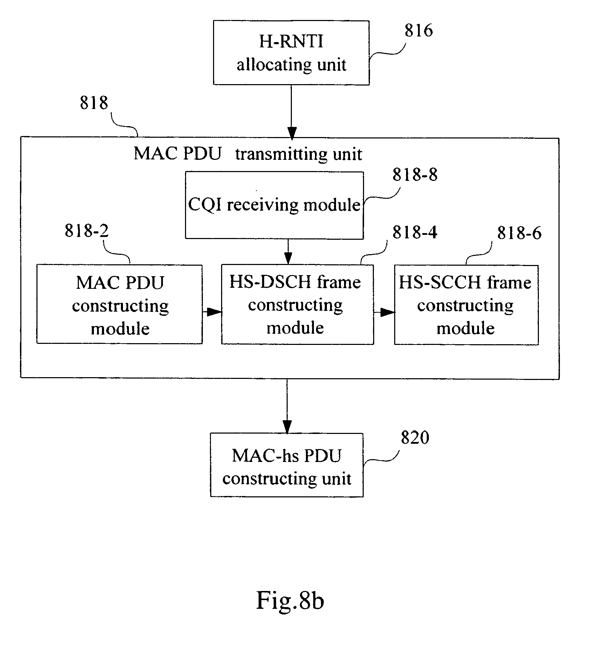

Preferably, as shown in figure 8-B, the transmission apparatus further includes: a MAC-hs PDU constructing unit 820 communication with the MAC PDU transmitting unit 818, adapted to construct a TSN, a VF and a Queue ID in the HS-SCCH frame constructed by the HS-SCCH frame constructing module 818-6 so as to construct the MAC-hs PDU.

The above are only exemplary embodiments of the present invention and are not for use in limiting the protection scope thereof. For those skilled in the art, there may be various modifications and changes to the present invention.

## Claims

1. A method for receiving information from high speed downlink packet access, HSDPA, channels, by a user equipment, UE, capable of being in a CELL_FACH state and capable of communicating with a Universal Terrestrial Radio Access Network, UTRAN, through HSDPA channels, **characterized in that**, the method comprises:
receiving (S404), by the UE in a CELL_FACH state, a high speed shared control channel, HS-SCCH, frame, a high speed downlink shared channel, HS-DSCH, a radio network temporary identity, H-RNTI, being carried in the HS-SCCH frame;
if the H-RNTI carried in the HS-SCCH frame is identical with a dedicated H-RNTI allocated by the UTRAN for the UE, receiving (S406), by the UE, a high speed physical downlink shared channel, HS-PDSCH specified by the HS-SCCH frame and decoding(S406) a HS-DSCH frame carried in the HS-PDSCH.

2. The method according to claim 1, further comprising:
receiving, by the UE, the dedicated H-RNTI from the UTRAN through radio resource control signaling.

3. The method according to claim 1 or 2, further comprising:
transmitting, by the UE, CQI information in a random access channel to a radio network controller for the UTRAN to determine a modulating and encoding scheme and the length of the HS-DSCH frame.

4. The method according to claim 3, wherein transmitting CQI information in a random access channel comprises:
transmitting, by the UE, the CQI information together with Radio Link Control, RLC, acknowledging information or RLC status information in the random access channel.

5. A method for transmitting information in high speed downlink packet access, HSDPA, channels, by a Universal Terrestrial Radio Access Network, UTRAN, to a user equipment, UE, capable of being in a CELL_FACH state, **characterized in that**, the method comprises:
transmitting, by the UTRAN, a high speed shared control channel, HS-SCCH, frame, wherein the HS-SCCH frame carries a high speed downlink shared channel, HS-DSCH, radio network temporary identity, H-RNTI; and
transmitting, by the UTRAN, in a high speed physical downlink share channel, HS-PDSCH, specified by the HS-SCCH frame, a HS-DSCH frame to be received and decoded by a UE in a CELL_FACH state with a dedicated H-RNTI which is identical with the H-RNTI carried in the HS-SCCH frame, wherein the dedicated H-RNTI is allocated by the UTRAN for the UE.

6. The method according to claim 5, wherein the header of a MAC PDU carried in the HS-DSCH frame does not include any UE identifier.

7. The method according to any of claims 5-6, further comprising:
transmitting, by the UTRAN, the dedicated H-RNTI to the UE through radio resource control signaling.

8. The method according to claim 7, further comprising:
receiving, by a radio network controller of the UTRAN, CQI information in a random access channel from the UE; and
determining, by the UTRAN, a modulating and encoding scheme and the length of the HS-DSCH frame according to the CQI information.

9. The method according to claim 7, further comprising:
receiving(S606), by a Node B of the UTRAN, a MAC PDU constructed by a radio network controller of the UTRAN and the H-RNTI;
correlating(S606) the MAC PDU with the H-RNTI;
constructing(S608), by the Node B, the HS-SCCH frame with the H-RNTI;
constructing(S610), by the Node B, the HS-DSCH frame with the MAC PDU.

10. An apparatus for receiving information from high speed downlink packet access, HSDPA, channels, wherein the apparatus is locatable in a user equipment, UE, capable of being in a CELL_FACH state and capable of communicating with a Universal Terrestrial Radio Access Network, UTRAN, through HSDPA channels, **characterized in that** the apparatus comprises:
an identity receiving unit (802), adapted to receive a dedicated high speed downlink shared channel, HS-DSCH, radio network temporary identity, H-RNTI, allocated by the UTRAN for the UE;
a control channel frame receiving unit (804), adapted to receive a high speed shared control channel, HS-SCCH, frame;
a comparing unit (806), adapted to judge whether a H-RNTI in the HS-SCCH frame received by the control channel frame receiving unit (804) is identical with the dedicated H-RNTI received by the identity receiving unit (802), and transmit a receiving indication to a physical channel receiving unit (808) if the H-RNTI carried in the HS-SCCH frame is identical with the dedicated H-RNTI;
the physical channel receiving unit (808), adapted to receive a high speed physical downlink shared channel, HS-PDSCH, specified by the HS-SCCH frame in response to receipt of the receiving indication from the comparing unit (806); and
a decoding unit (810), adapted to decode a HS-DSCH frame carried in the HS-PDSCH.

11. The apparatus according to claim 10, further comprising:
a MAC PDU receiving unit (812), adapted to receive MAC PDUs carried in the decoded HS-DSCH frame ;
a channel quality indicating information transmitting unit (814) communicating with the MAC PDU receiving unit (812), adapted to transmit the CQI information to the UTRAN.

12. An apparatus for transmitting information in high speed downlink packet access, HSDPA, channels, to a user equipment, UE, capable of being in a CELL_FACH state, **characterized in that** the apparatus is capable of being arranged at a Universal Terrestrial Radio Access Network, UTRAN and comprises:
an identity allocating unit (816), adapted to allocate a dedicated high speed downlink shared channel, HS-DSCH, and a dedicated radio network temporary identity, H-RNTI, for the UE in CELL_FACH state, and transmit the dedicated H-RNTI to the UE through radio resource control signaling; and
a medium access control packet data unit, MAC PDU, transmitting unit (818) communicating with the identity allocating unit (816), adapted to transmit MAC PDU destined for the UE in a high speed shared packet access channel to the UE.

13. The apparatus according to claim 12, wherein the MAC PDU transmitting unit comprises:
a MAC PDU constructing module (818-2), adapted to construct a MAC PDU which carries a MAC PDU header which does not include any UE identifier;
a HS-DSCH frame constructing module (818-4), adapted to construct a HS-DSCH frame by using the MAC PDU constructed by the MAC PDU constructing unit (818-2), and transmit the HS-DSCH frame; and
a high speed shared control channel, HS-SCCH, frame constructing module (818-6), adapted to construct a HS-SCCH frame by using the H-RNTI allocated by the identity allocating unit (816), and transmit the HS-SCCH frame.

14. The apparatus according to claim 13, further comprising:
a MAC-hs PDU constructing unit (820) communicating with the MAC PDU transmitting unit (818), adapted to construct a transmission sequence number, TSN, a version flag, VF, and a queue identifier in the HS-DSCH frame constructed by the HS-SCCH frame constructing module (818-6) to form a MAC-hs PDU.

15. The apparatus according to claim 13 or 14, wherein the MAC PDU transmitting unit (818) further comprises: a CQI information receiving module (818-8), adapted to receive CQI information from the UE, and transmit the CQI information to the HS-DSCH frame constructing module (818-4),
wherein the HS-DSCH frame constructing module (818-4) is further adapted to determine, according to the CQI information, at least one of:
a scheme for modulating and encoding a high speed physical downlink shared channel, HS-PDSCH, in which the HS-DSCH frame is transmitted, and
frame length of the HS-DSCH frame.

## Patentansprüche

1. Verfahren zum Empfangen von Informationen von Hochgeschwindigkeits-Abwärtsstrecken-Paketzugriffskanälen, HSDPA-Kanälen, durch ein Anwendergerät, UE, das in einem CELL_FACH-Zustand sein kann und das mit einem universellen terrestrischen Funkzugriffsnetz, UTRAN, über HSDPA-Kanäle kommunizieren kann, **dadurch gekennzeichnet, dass** das Verfahren enthält:
Empfangen (S404) durch das UE in einem CELL_FACH-Zustand eines gemeinsam genutzten Hochgeschwindigkeits-Steuerkanalrahmens, HS-SCCH-Rahmens, eines gemeinsam genutzten Hochgeschwindigkeits-Abwärtsstreckenkanals, HS-DSCH, und einer temporären Funknetzidentität, H-RNTI, die in dem HS-SCCH-Rahmen transportiert werden;
falls die in dem HS-SCCH-Rahmen transportierte H-RNTI mit einer dedizierten H-RNTI, die durch das UTRAN für das UE zugewiesen ist, identisch ist, Empfangen (S406) durch das UE eines gemeinsam genutzten physikalischen Hochgeschwindigkeits-Abwärtsstreckenkanals, HS-PDSCH, der durch den HS-SCCH-Rahmen spezifiziert ist, und Decodieren (S406) eines in dem HS-PDSCH transportierten HS-DSCH-Rahmens.

2. Verfahren nach Anspruch 1, das ferner enthält:
Empfangen durch das UE der dedizierten H-RNTI von dem UTRAN über eine Funkbetriebsmittelsteuerungs-Signalgebung.

3. Verfahren nach Anspruch 1 oder 2, das ferner enthält:
Senden durch das UE von CQI-Informationen in einem Zufallszugriffskanal zu einem Funknetz-Controller für das UTRAN, um ein Modulations- und Codierungsschema und die Länge des HS-DSCH-Rahmens zu bestimmen.

4. Verfahren nach Anspruch 3, wobei das Senden von CQI-Informationen in einem Zufallszugriffskanal enthält:
Senden durch das UE der CQI-Informationen zusammen mit Funkstreckensteuerungs-Quittierungsinformationen, RLC-Quittierungsinformationen, oder mit RLC-Statusinformationen in dem Zufallszugriffskanal.

5. Verfahren zum Senden von Informationen in Hochgeschwindigkeits-Abwärtsstrecken-Paketzugriffskanälen, HSDPA-Kanälen, durch ein universelles terrestrisches Funkzugriffsnetz, UTRAN, zu einem Anwendergerät, UE, das in einem CELL_FACH-Zustand sein kann, **dadurch gekennzeichnet, dass** das Verfahren enthält:
Senden durch das UTRAN eines gemeinsam genutzten Hochgeschwindigkeits-Steuerkanalrahmens, HS-SCCH-Rahmens, wobei der HS-SCCH-Rahmen einen gemeinsam genutzten Hochgeschwindigkeits-Abwärtsstreckenkanal, HS-DSCH, und eine temporäre Funknetzidentität, H-RNTI, transportiert; und
Senden durch das UTRAN in einem gemeinsam genutzten physikalischen Hochgeschwindigkeits-Abwärtsstreckenkanal, HS-PDSCH, der durch den HS-SCCH-Rahmen spezifiziert ist, eines HS-DSCH-Rahmens, der durch das UE in einem CELL_FACH-Zustand mit einer dedizierten H-RNTI, die mit der in dem HS-SCCH-Rahmen transportierten H-RNTI identisch ist, empfangen und decodiert werden soll, wobei die dedizierte H-RNTI durch das UTRAN für das UE zugewiesen wird.

6. Verfahren nach Anspruch 5, wobei der Kopfsatz einer in dem HS-DSCH-Rahmen transportierten MAC PDU keinerlei UE-Kennung enthält.

7. Verfahren nach einem der Ansprüche 5-6, das enthält:
Senden durch das UTRAN der dedizierten H-RNTI zu dem UE über eine Funkbetriebsmittelsteuerungs-Signalgebung.

8. Verfahren nach Anspruch 7, das ferner enthält:
Empfangen durch einen Funknetz-Controller des UTRAN von CQI-Informationen in einem Zufallszugriffskanal von dem UE; und
Bestimmen durch das UTRAN eines Modulations- und Codierungsschemas und der Länge des HS-DSCH-Rahmens gemäß den CQI-Informationen.

9. Verfahren nach Anspruch 7, das ferner enthält:
Empfangen (S606) durch einen Knoten B des UTRAN einer MAC PDU, die durch einen Funknetz-Controller des UTRAN konstruiert ist, und der H-RNTI;
Korrelieren (S606) der MAC PDU mit der H-RNTI;
Konstruieren (S608) durch den Knoten B des HS-SCCH-Rahmens mit der H-RNTI;
Konstruieren (S610) durch den Knoten B des HS-DSCH-Rahmens mit der MAC PDU.

10. Vorrichtung zum Empfangen von Informationen von Hochgeschwindigkeits-Abwärtsstrecken-Paketzugriffskanälen, HSDPA-Kanälen, wobei die Vorrichtung in einem Anwendergerät, UE, lokalisierbar ist, das in einem CELL_FACH-Zustand sein kann und mit einem universellen terrestrischen Funkzugriffsnetz, UTRAN, über HSDPA-Kanäle kommunizieren kann, **dadurch gekennzeichnet, dass** die Vorrichtung enthält:
eine Identitätsempfangseinheit (802), die dazu ausgelegt ist, einen dedizierten gemeinsam genutzten Hochgeschwindigkeits-Abwärtsstreckenkanal, HS-DSCH, und eine temporäre Funknetzidentität, H-RNTI, die durch das UTRAN für das UE zugewiesen wird, zu empfangen;
eine Steuerkanalrahmen-Empfangseinheit (804), die dazu ausgelegt ist, einen gemeinsam genutzten Hochgeschwindigkeits-Steuerkanalrahmen, HS-SCCH-Rahmen, zu empfangen;
eine Vergleichseinheit (806), die dazu ausgelegt ist zu beurteilen, ob eine H-RNTI in dem HS-SCCH-Rahmen, der von der Steuerkanalrahmen-Empfangseinheit (804) empfangen wird, mit der dedizierten H-RNTI, die von der Identitätsempfangseinheit (802) empfangen wird, identisch ist, und eine Empfangsangabe zu einer Empfangseinheit (808) eines physikalischen Kanals zu senden, falls die in dem HS-SCCH-Rahmen transportierte H-RNTI mit der dedizierten H-RNTI identisch ist;
wobei die Empfangseinheit (808) eines physikalischen Kanals dazu ausgelegt ist, einen gemeinsam genutzten physikalischen Hochgeschwindigkeits-Abwärtsstreckenkanal, HS-PDSCH, der durch den HS-SCCH-Rahmen spezifiziert ist, in Reaktion auf den Empfang der Empfangsangabe von der Vergleichseinheit (806) zu empfangen; und
eine Decodierungseinheit (810), die dazu ausgelegt ist, einen in dem HS-PDSCH transportierten HS-DSCH-Rahmen zu decodieren.

11. Vorrichtung nach Anspruch 10, die ferner enthält:
eine MAC PDU-Empfangseinheit (812), die dazu ausgelegt ist, in dem decodierten HS-DSCH-Rahmen transportierte MAC PDUs zu empfangen;
eine Kanalqualitätsangabeinformation-Sendeeinheit (814), die mit der MAC PDU-Empfangseinheit (812) kommuniziert und dazu ausgelegt ist, die CQI-Informationen zu dem UTRAN zu senden.

12. Vorrichtung zum Senden von Informationen in Hochgeschwindigkeits-Abwärtsstrecken-Paketzugriffskanälen, HSDPA-Kanälen, zu einem Anwendergerät, UE, das in einem CELL_FACH-Zustand sein kann, **dadurch gekennzeichnet, dass** die Vorrichtung in einem universellen terrestrischen Funkzugriffsnetz, UTRAN, angeordnet sein kann und enthält:
eine Identitätszuweisungseinheit (816), die dazu ausgelegt ist, einen dedizierten gemeinsam genutzten Hochgeschwindigkeits-Abwärtsstreckenkanal, HS-DSCH, und eine dedizierte temporäre Funknetzidentität, H-RNTI, für das UE in dem CELL_FACH-Zustand zuzuweisen und die dedizierte H-RNTI zu dem UE über eine Funkbetriebsmittelsteuerungs-Signalgebung zu senden; und
eine Mediumzugriffssteuerungs-Paketdateneinheit-Sendeeinheit, MAC PDU-Sendeeinheit (818), die mit der Identitätszuweisungseinheit (816) kommuniziert und dazu ausgelegt ist, die für das UE bestimmte MAC PDU in einem gemeinsam genutzten Hochgeschwindigkeits-Paketzugriffskanal zu dem UE zu senden.

13. Vorrichtung nach Anspruch 12, wobei die MAC PDU-Sendeeinheit enthält:
ein MAC PDU-Konstruktionsmodul (818-2), das dazu ausgelegt ist, eine MAC PDU zu konstruieren, die einen MAC PDU-Kopfsatz transportiert, der keinerlei UE-Kennung enthält;
ein HS-DSCH-Rahmen-Konstruktionsmodul (818-4), das dazu ausgelegt ist, einen HS-DSCH-Rahmen unter Verwendung der MAC PDU, die durch die MAC PDU-Konstruktionseinheit (818-2) konstruiert ist, zu konstruieren und den HS-DSCH-Rahmen zu senden; und
ein Konstruktionsmodul (818-6) für einen gemeinsam genutzten Hochgeschwindigkeits-Steuerkanalrahmen, HS-SCCH-Rahmen, das dazu ausgelegt ist, einen HS-SCCH-Rahmen unter Verwendung der durch die Identitätszuweisungseinheit (816) zugewiesenen H-RNTI zu konstruieren und den HS-SCCH-Rahmen zu senden.

14. Vorrichtung nach Anspruch 13, die ferner enthält,
eine MAC-hs PDU-Konstruktionseinheit (820), die mit der MAC PDU-Sendeeinheit (818) kommuniziert und dazu ausgelegt ist, eine Sendefolgennummer, TSN, ein Versions-Flag, VF, und eine Warteschlangenkennung in dem HS-DSCH-Rahmen, der durch das HS-SCCH-Rahmen-Konstruktionsmodul (818-6) konstruiert ist, zu konstruieren, um eine MAC-hs PDU zu bilden.

15. Vorrichtung nach Anspruch 13 oder 14, wobei die MAC PDU-Sendeeinheit (818) ferner enthält:
ein CQI-Informationsempfangsmodul (818-8), das dazu ausgelegt ist, CQI-Informationen von dem UE zu empfangen und die CQI-Informationen zu dem HS-DSCH-Rahmen-Konstruktionsmodul (818-4) zu senden,
wobei das HS-DSCH-Rahmen-Konstruktionsmodul (818-4) ferner dazu ausgelegt ist, in Übereinstimmung mit den CQI-Informationen zu bestimmen:
ein Schema zum Modulieren und Codieren eines gemeinsam genutzten physikalischen Hochgeschwindigkeits-Abwärtsstreckenkanals, HS-PDSCH, in dem der HS-DSCH-Rahmen gesendet wird, und/oder
die Rahmenlänge des HS-DSCH-Rahmens.

## Revendications

1. Procédé de réception d'informations depuis des canaux d'accès de paquets de liaison descendante à haut débit, HSDPA, par un équipement d'utilisateur, UE, capable de se trouver dans un état CELL_FACH et capable de communiquer avec un Réseau d'Accès Radio Terrestre Universel, UTRAN, par le biais de canaux HSDPA, **caractérisé en ce que** le procédé comprend :
la réception (S404) par l'UE dans un état CELL_FACH, d'une trame de canal de commande partagé à haut débit, HS-SCCH, une identité temporaire H-RNTI de réseau radio à canaux partagés de liaison descendante à haut débit HS-DSCH étant portée dans la trame HS-SCCH ;
si la H-RNTI portée dans la trame HS-SCCH est identique à une H-RNTI dédiée assignée par l'UTRAN à l'UE, la réception (S406), par l'UE, d'un canal partagé de liaison descendante physique à haut débit, HS-PDSCH, spécifié par la trame HS-SCCH et le décodage (S406) d'une trame HS-DSCH portée dans le HS-PDSCH.

2. Procédé selon la revendication 1, comprenant en outre :
la réception, par l'UE, de la H-RNTI dédiée depuis l'UTRAN par signalisation de commande de ressources radio.

3. Procédé selon la revendication 1 ou 2, comprenant en outre :
la transmission, par l'UE, d'informations CQI dans un canal d'accès aléatoire à un contrôleur de réseau radio de l'UTRAN pour déterminer un plan de modulation et de codage, et la longueur de la trame HS-DSCH.

4. Procédé selon la revendication 3, dans lequel la transmission d'informations CQI dans un canal d'accès aléatoire comprend :
la transmission, par l'UE, des informations CQI avec des informations d'acquittement de Commande de Liaison Radio, RLC, ou des informations d'état RLC dans le canal d'accès aléatoire.

5. Procédé de transmission d'informations dans des canaux d'accès de paquets de liaison descendante à haut débit, HSDPA, par un Réseau d'Accès Radio Terrestre Universel, UTRAN, à un équipement d'utilisateur, UE, capable de se trouver dans un état CELL_FACH, **caractérisé en ce que** le procédé comprend :
la transmission, par l'UTRAN, d'une trame de canal de commande partagé à haut débit, HS-SCCH, la trame HS-SCCH portant une identité temporaire H-RNTI de réseau radio à canaux partagés de liaison descendante à haut débit HS-DSCH ; et
la transmission, par l'UTRAN, dans un canal partagé de liaison descendante physique à haut débit, HS-PDSCH, spécifié par la trame HS-SCCH, d'une trame HS-DSCH destinée à être reçue et décodée par un UE se trouvant dans un état CELL_FACH ayant une H-RNTI dédiée identique à la H-RNTI portée dans la trame HS-SCCH, la H-RNTI dédiée étant assignée par l'UTRAN à l'UE.

6. Procédé selon la revendication 5, dans lequel l'en-tête d'une PDU MAC portée dans la trame HS-DSCH ne comporte pas d'identifiant d'UE.

7. Procédé selon l'une quelconque des revendications 5-6, comprenant en outre :
la transmission, par l'UTRAN, de la H-RNTI dédiée à l'UE par signalisation de commande de ressources radio.

8. Procédé selon la revendication 7, comprenant en outre :
la réception, par un contrôleur de réseau radio de l'UTRAN, d'informations CQI dans un canal d'accès aléatoire depuis l'UE ; et
la détermination, par l'UTRAN, d'un plan de modulation et de codage ainsi que de la longueur de la trame HS-DSCH en fonction des informations CQI.

9. Procédé selon la revendication 7, comprenant en outre :
la réception (S606), par un Noeud B de l'UTRAN, d'une PDU MAC construite par un contrôleur de réseau radio de l'UTRAN et la H-RNTI ;
la corrélation (S606) de la PDU MAC avec la H-RNTI ;
la construction (S608), par le Noeud B, de la trame HS-SCCH avec la H-RNTI ;
la construction (S610), par le Noeud B, de la trame HS-DSCH avec la PDU MAC.

10. Appareil de réception d'informations depuis des canaux d'accès de paquets de liaison descendante à haut débit, HSDPA, l'appareil pouvant être installé dans un équipement d'utilisateur, UE, capable de se trouver dans un état CELL_FACH et capable de communiquer avec un Réseau d'Accès Radio Terrestre Universel, UTRAN, par le biais de canaux HSDPA, **caractérisé en ce que** l'appareil comprend :
une unité de réception d'identité (802), adaptée pour recevoir une identité temporaire H-RNTI de réseau radio à canaux partagés de liaison descendante à haut débit HS-DSCH, assignée par l'UTRAN à l'UE ;
une unité de réception de trame de canal de commande (804), adaptée pour recevoir une trame de canal de commande partagé à haut débit, HS-SCCH ;
une unité de comparaison (806), adaptée pour juger si une H-RNTI dans la trame HS-SCCH reçue par l'unité de réception de trame de canal de commande (804) est identique ou non à la H-RNTI dédiée reçue par l'unité de réception d'identité (802), et
transmettre une indication de réception à une unité de réception de canal physique (808) si la H-RNTI portée dans la trame HS-SCCH est identique à la H-RNTI dédiée;
une unité de réception de canal physique (808), adaptée pour recevoir un canal partagé de liaison descendante physique à haut débit, HS-PDSCH, spécifié par la trame HS-SCCH en réponse à l'indication de réception depuis l'unité de comparaison (806) ; et
une unité de décodage (810), adaptée pour décoder une trame HS-DSCH portée dans le HS-PDSCH.

11. Appareil selon la revendication 10, comprenant en outre :
une unité de réception de PDU MAC (812), adaptée pour recevoir des PDU MAC portées dans la trame HS-DSCH décodée ;
une unité de transmission d'informations indicatrices de qualité de canal (814) communiquant avec l'unité de réception de PDU MAC (812), adaptée pour transmettre les informations CQI à l'UTRAN.

12. Appareil de transmission d'informations dans des canaux d'accès de paquets de liaison descendante à haut débit, HSDPA, à un équipement d'utilisateur, UE, capable de se trouver dans un état CELL_FACH, **caractérisé en ce que** l'appareil peut être agencé au niveau d'un Réseau d'Accès Radio Terrestre Universel, UTRAN, et comprend :
une unité d'assignation d'identité (816), adaptée pour assigner une identité temporaire et dédiée H-RNTI de réseau radio à canaux partagés de liaison descendante à haut débit HS-DSCH à l'UE dans un état CELL_FACH, et transmettre la H-RNTI dédiée à l'UE par signalisation de commande de ressources radio ; et
une unité de transmission (818) d'unités de données de paquets de commande d'accès au support PDU MAC, communiquant avec l'unité d'assignation d'identité (816), adaptée pour transmettre à l'UE les PDU MAC destinées à l'UE dans un canal d'accès de paquets partagé à haut débit.

13. Appareil selon la revendication 12, dans lequel l'unité de transmission de PDU MAC comprend :
un module de construction de PDU MAC (818-2), adapté pour construire une PDU MAC portant un en-tête de PDU MAC qui n'inclut pas d'identifiant d'UE ;
un module de construction de trame HS-DSCH (818-4), adapté pour construire une trame HS-DSCH en utilisant la PDU MAC construite par l'unité de construction de PDU MAC (818-2), et transmettre la trame HS-DSCH ; et
un module de construction de trame de canal de commande partagé à haut débit, HS-SCCH (818-6), adapté pour construire une trame HS-SCCH en utilisant la H-RNTI assignée par l'unité d'assignation d'identité (816), et transmettre la trame HS-SCCH.

14. Appareil selon la revendication 13, comprenant en outre :
une unité de construction de PDU MAC-hs (820), communiquant avec l'unité de transmission de PDU MAC (818), adaptée pour construire un numéro de séquence de transmission, TSN, un fanion de version, VF, et un identifiant de file d'attente dans la trame HS-DSCH construite par le module de construction de trame HS-SCCH (818-6) pour former une PDU MAC-hs.

15. Appareil selon la revendication 13 ou 14, dans lequel l'unité de transmission de PDU MAC (818) comprend en outre un module de réception d'informations CQI (818-8), adapté pour recevoir des informations CQI depuis l'UE, et transmettre les informations CQI au module de construction de trame HS-DSCH (818-4),
dans lequel le module de construction de trame HS-DSCH (818-4) est adapté en outre pour déterminer, en fonction des informations CQI, au moins l'un :
d'un plan de modulation et de codage d'un canal partagé de liaison descendante physique à haut débit, HS-PDSCH, dans lequel la trame HS-DSCH est transmise, et d'une longueur de trame de la trame HS-DSCH.
